# EUROPEAN PATENT SPECIFICATION

(11) **EP 2 348 338 B1**
(45) Date of publication and mention of the grant of the patent: **21.11.2012**
(21) Application number: 10150827.3
(22) Date of filing: 15.01.2010
(51) Int. Cl.: G01V 7/00

(54) **Interferometric differential free-fall gradiometer**
Interferometrisches Differential-Freifall-Gradiometer
Gradiomètre de chute libre différentiel interférométrique

(43) Date of publication of application: 27.07.2011
(73) Proprietor: Université du Luxembourg, 1511 Luxembourg-Limpertsberg (LU)
(72) Inventor: Rothleitner, Christian, 54294 Trier (DE)
(74) Representative: Lecomte, Didier

(56) References cited:
- FR-A5- 2 089 057
- US-A- 3 688 584
- US-A- 3 693 451
- US-A- 3 865 467
- US-A1- 2003 081 218
- US-A1- 2008 034 855
- US-A1- 2009 219 546

## Description

### Technical field

The invention is related to the technical field of interferometric free-fall gravity gradiometers.

### State of the art

Many gradiometers are known in the state of the art being able to measure the second derivative of the gravitational potential, i.e. the value of the gravity gradient.

Such a device is for instance disclosed in US patent 3,693,451. This gravity gradiometer is based on dual free-falling objects in an evacuated vessel. For measurement of the second derivative of the gravitational potential a beam of laser light is generated which is split into two measuring beams. Each of both measuring beams is guided to one of the two free-falling objects. The measuring beams reflected by the objects are recombined and finally detected by a photo detector. Thus, the gradient of the gravitational force can be determined.

Recent science also utilizes atomic interferometry for determining the first or second derivative of the gravitational potential as e.g. disclosed in the publication "Measurement of gravitational acceleration by dropping atoms" of Peters et al., Nature, Vol. 400, pp. 849-852, August 26, 1999. But like many other known systems, this system comprises at least one component which is fixed to the ground and is thus, albeit seismic isolation, sensitive to ground vibrations which inhibits very exact measurements. At least such a seismic isolation can be difficult or expensive to construct. This disadvantage generally occurs in many interferometric gradiometers.

US patent 3,688,584 discloses another apparatus for measuring gravity gradients which is basically similar to the first mentioned device. In an embodiment of this apparatus two retroreflectors arranged above each other are caused to experience free flight. A laser is used to generate a beam of light which is guided to the system of two falling retroreflectors. The distance change between the two retroreflectors is determined by interfering reflected beams which are detected by a detector. The time rate of change of the frequency of the output signal of the detector is directly related to the vertical gradient of gravity, i.e. the second derivative of the gravitational potential.

However, there remains a need for a better characterization of the gravitational gradient. In particular knowledge of the third derivative of the gravitational potential, i.e. the derivative of the gravitational gradient is desired. Such information is of interest for many applications e.g. in aviation, space flight, for geological investigations or military applications since the knowledge of this third derivative could enhance the accuracy of many measurement devices.

Document US 2003/0081218 A1 discloses a gravity sensor which is able to determine a gravity difference. In certain embodiments of the sensor a system of multiple free falling masses comprising reflectors is provided, wherein the reflectors are optically linked in series in order to measure a gravity difference.

Document US 2009/0219546 A1 discloses a system for measuring gravity. In one embodiment of this system, a mass comprising two reflectors is arranged to fall freely between to rigidly arranged lenses, enabling the determination of gravity values.

Thus, the technical problem of the present invention is to obtain a system for determining changes of the gradient of the gravitation subject to height, and in particular for determining the third derivative of the gravitational potential.

### Disclosure of the invention

The above mentioned technical problem is solved by the present invention according to appended claim 1 comprising an interferometric free-fall gradiometer suitable for measuring the derivative of the gravitational gradient. This gradiometer comprises at least one source of coherent light and a first retroreflector which is arranged to fall freely in the gradiometer as well as a second retroreflector being arranged to fall freely in the gradiometer and disposed essentially under, preferably vertically under, the first retroreflector. Furthermore, the gradiometer comprises a light guiding assembly configured for guiding the coherent light to the first and second retroreflectors, thereby generating reflected beams and causing the reflected beams to interfere. In accordance with the present invention the gradiometer further comprises an assembly of a third and a fourth retroreflector arranged to fall freely in the gradiometer and disposed essentially between the first and second retroreflectors, and the light guiding assembly further comprises a beam splitter. Still in accordance with the present invention, the at least one source of coherent light and the light guiding assembly are arranged for generating a first beam and a second beam of light, wherein the first beam is at least partially reflected by the first retroreflector and subsequently by the third retroreflector, or vice versa, and the second beam is at least partially reflected by the second retroreflector and subsequently by the fourth retroreflector, or vice versa, such that the interference of the resulting at least partially reflected first and second beams being combined by the beam splitter is indicative of the variation (change) of the distance between the first and the third retroreflectors and the distance between the second and the fourth retroreflectors.

With this gradiometer according to the invention, information about the third derivative of the gravitational potential can be obtained. This advantageous solution is not known by the prior art, since only one or two falling masses, respectively retroreflectors, are provided in the prior art. In detail, only the distance between two falling masses has been measured by prior art devices or even only the distance between one falling mass and a fixed second reflector or mirror resulting in the above mentioned disadvantages. Hence, no value or direct information with regard to the third derivative of the gravitational potential can be obtained with the prior art devices. Due to the distance measurements between the first and the third retroreflectors and the second and the fourth retroreflectors in accordance with the present invention, information about the third derivative of the gravitational potential is obtained.

In a preferred embodiment according to the invention all retroreflectors are arranged essentially in one vertical line. Such an arrangement of the four retroreflectors allows e.g. for an even better accuracy of the measurements with the gradiometer.

In a further embodiment of the gradiometer in accordance with the invention, the third retroreflector and the fourth retroreflector of the assembly of retroreflectors are connected to each other and are oppositely arranged. Although it is possible that the third and the fourth retroreflectors are not connected for measuring the paths, respectively the distances, between the first and the third retroreflectors and the second and the fourth retroreflectors, it is advantageous to provide the assembly of retroreflectors in such a form that the third and the fourth retroreflectors are connected, respectively coupled, to each other. In particular, in this configuration it is possible to construct the assembly of the third and the fourth retroreflectors in a manner that the optical centre of each of the third and fourth retroreflectors is located in the centre of mass of the retroreflector assembly. This arrangement helps in avoiding measurement errors which would be caused by different rotation of the single retroreflectors of the retroreflector assembly during free fall.

In yet another preferred embodiment of the present invention the coherent light has at least one linear polarization.

In yet another preferred embodiment the coherent light has at least two orthogonal linear polarizations and the guiding assembly further comprises a first non-polarizing beam splitter, arranged and adapted for splitting a beam of light generated by the source of light into the first beam and the second beam. Moreover, the guiding assembly comprises a first polarizing beam splitter arranged and adapted for splitting the first beam into a third beam and a fourth beam, wherein the first retroreflector is arranged and adapted for reflecting the third beam to the third retroreflector which is arranged and adapted for reflecting the third beam back to the first polarizing beam splitter, or vice versa, such that the third beam and the fourth beam can recombine in form of the first resulting beam. Furthermore, a second polarizing beam splitter is arranged and adapted for splitting the second beam into a fifth and a sixth beam, wherein the second retroreflector is arranged and adapted for reflecting the fifth beam to the fourth retroreflector which is arranged, and adapted for reflecting the fifth beam back to the second polarizing beam splitter, or vice versa, such that the fifth beam and the sixth beam can recombine in form of the second resulting beam. Additionally, a second non-polarizing beam splitter is provided for recombining the first resulting beam and the second resulting beam to a recombined beam; whereas the gradiometer further comprises a detector arranged for receiving the recombined beam. Hence, this embodiment renders an advanced device, respectively system, for measuring the third derivative of the gravitational potential. In particular, the distances between the first and the third retroreflectors and between the second and the fourth retroreflectors are determined, respectively measured. The information is carried by the resulting first and second beams. Preferably, these beams are brought to interference which is detected by the detector. Additionally, this gradiometer maintains the possibility of measuring the value of the second derivative of the gravitational potential because such information is provided in the resulting first beam or in the resulting second beam.

In yet another preferred embodiment of the gradiometer the first polarizing beam splitter is arranged essentially between the first retroreflector and the third retroreflector and the second polarizing beam splitter is arranged essentially between the second retroreflector and the fourth retroreflector whereas the gradiometer further comprises: a first lambda quarter plate being arranged between the first retroreflector and the first polarizing beam splitter, as well as a second lambda quarter plate being arranged between the third retroreflector and the first polarizing beam splitter. Additionally, the gradiometer preferably comprises a third lambda quarter plate being arranged between the second retroreflector and the second polarizing beam splitter, as well as a fourth lambda quarter plate being arranged between the fourth retroreflector and the second polarizing beam splitter. With the availability of such an advantageous gradiometer, the third derivative of the gravitational potential can also be determined. Furthermore, using the lambda quarter plates and the reflection in the corners of the corner cube reflectors enables a very compact design of the gradiometer.

In a further preferred embodiment of the gradiometer in accordance with the invention, the gradiometer further comprises a first polarization filter arranged in the path of the first resulting beam and/or a second polarization filter arranged in the path of second resulting beam.

In yet another preferred embodiment, the coherent light has at least two orthogonal linear polarizations and the light guiding assembly further comprises: a first non-polarizing beam splitter arranged and adapted for splitting a beam of light generated by the source of light into the first beam and the second beam, as well as a first polarizing beam splitter arranged and adapted for splitting the first beam into a third beam and a fourth beam, wherein the first retroreflector is arranged and adapted for reflecting the third beam to the third retroreflector which is arranged and adapted for reflecting the third beam back to the first polarizing beam splitter, or vice versa, such that the third beam and the fourth beam can recombine in form of the first resulting beam. Furthermore the light guiding assembly comprises a second polarizing beam splitter arranged and adapted for splitting the second beam into a fifth and a sixth beam, wherein the second retroreflector is arranged and adapted for reflecting the fifth beam to the fourth retroreflector which is arranged, and adapted for reflecting the fifth beam back to the second polarizing beam splitter, or vice versa, such that the fifth beam and the sixth beam can recombine in form of the second resulting beam. Moreover, in accordance with this embodiment the light guiding assembly further comprises a beam splitter assembly, wherein the beam splitter assembly is either arranged and adapted to at least partially recombine the first resulting beam and the second resulting beam to a recombined beam which can be received by a detector; or to reflect one of the resulting beams at least partially to a first detector and the second of the resulting beams at least partially to a second detector. Thus, this embodiment provides one preferable embodiment of a gradiometer which can be used for an easy determination of the third derivative of the gravitational potential as well as of the second derivative of the gravitational potential.

In accordance with a further preferred embodiment of the invention the coherent light source is adapted for providing light with at least one linear polarization and the guiding assembly further comprises: a first non-polarizing beam splitter arranged and adapted for splitting a beam of light generated by the source of light into the first beam and the second beam; and a first polarizing beam splitter or double mirror arranged and adapted for guiding the first beam to the first retroreflector, where it is reflected to the third retroreflector, or vice versa, and subsequently reflected by the first polarizing beam splitter or double mirror to form the first resulting beam. Moreover, preferably a second polarizing beam splitter or double mirror is arranged and adapted for guiding the second beam to the second retroreflector, wherein the latter is reflected to the fourth retroreflector, or vice versa, and is subsequently reflected by the second polarizing beam splitter or double mirror to form the second resulting beam. Finally, a second non-polarizing beam splitter is preferably comprised for recombining the first resulting beam and the second resulting beam to a recombined beam. At last, the gradiometer further preferably comprises a detector arranged for receiving the recombined beam. One advantage of this preferred embodiment is the relatively simple design which can also be used to obtain information about the third derivative of the gravitational potential.

In accordance with yet a further preferred embodiment of the invention the generated coherent light has at least two orthogonal polarizations, whereas the guiding assembly comprises: a first polarizing beam splitter or double mirror arranged and adapted for guiding the first beam to the first retroreflector where it is reflected to the third retroreflector, or vice versa, and subsequently reflected by the first polarizing beam splitter or double mirror to form the first resulting beam. Additionally, the second polarizing beam splitter or double mirror is arranged and adapted for guiding the second beam to the second retroreflector where it is reflected to the fourth retroreflector, or vice versa, and subsequently reflected by the second polarizing beam splitter or double mirror to form the second resulting beam. Furthermore, the guiding assembly further comprises an initial polarizing beam splitter arranged and adapted for splitting the beam of light generated by the source of light into the first beam and the second beam, whereas the first beam exhibits a first polarization and the second beam exhibits a second polarization. At last, a recombining beam splitter is arranged and adapted for recombining the first resulting beam and the second resulting beam to a recombined beam, whereas the gradiometer further comprises a detector which is arranged for receiving the recombined beam. This preferred embodiment provides another effective way of providing a gradiometer for determining the third derivative of the gravitation potential.

Moreover, in accordance with this preferred embodiment a polarizer may be arranged in the path of the recombined beam between the recombining beam splitter and the detector for receiving an improved detectable signal.

In yet another embodiment of the gradiometer according to the invention the first polarizing beam splitter or double mirror is preferably arranged essentially between the first retroreflector and the third retroreflector and/or the second polarizing beam splitter or double mirror is preferably arranged essentially between the second retroreflector and the fourth retroreflector.

In another preferred embodiment of the invention each of the reflectors is a corner cube retroreflector which can be either arranged such that a respective incident beam of light is reflected with a lateral offset or can be arranged such that the incident beam of light is reflected by the corner of the corner cube retroreflector. Hence, depending on the desired arrangement a beam of light may be reflected with a lateral offset or be reflected by 180 degrees in essentially one point.

Finally, in accordance with yet another preferred embodiment of the invention the distance between the first retroreflector and the third retroreflector is equal to the distance between the second retroreflector and the fourth retroreflector. Other distances could be chosen but especially this arrangement is in particular convenient for determining the third derivative of the gravitational potential.

### Brief description of the Figures

In the following reference is made to the Figures of the preferred embodiments of the invention. More details can be found in the detailed description of the preferred embodiments of the invention.
- Figure 1: depicts a schematic diagram of a first embodiment of a gradiometer in accordance with the invention;
- Figure 2: depicts a schematic diagram of a second embodiment of a gradiometer in accordance with the invention;
- Figure 3: depicts a schematic diagram of a third embodiment of a gradiometer in accordance with the invention;
- Figure 4: depicts a schematic diagram of a fourth embodiment of a gradiometer in accordance with the invention; and
- Figure 5: depicts a schematic diagram of a fifth embodiment of a gradiometer in accordance with the invention.

### Detailed description of the preferred embodiments

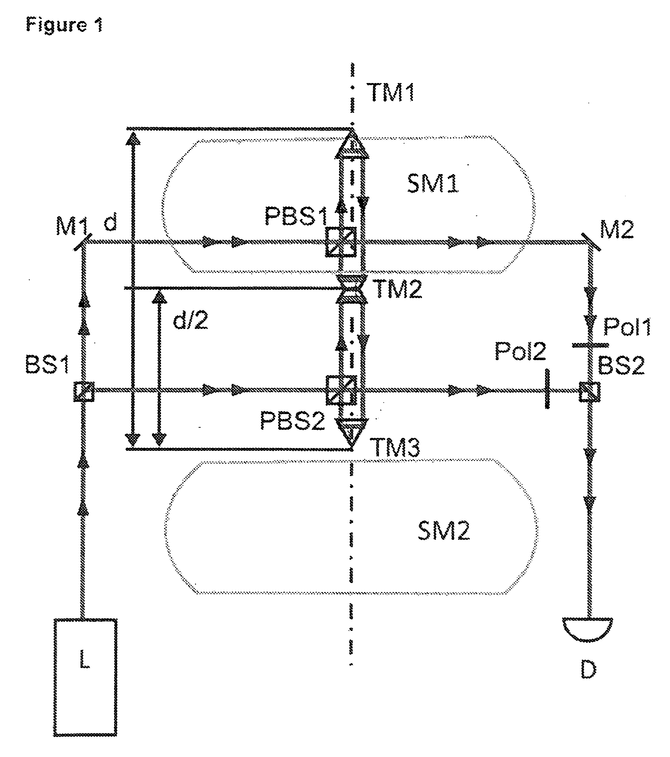

Figure 1 depicts a first preferred embodiment of the invention. A source of light L, in this case a laser source (or Laser) generates coherent light of two orthogonally polarized vibration modes. The laser light is split into two beams, a first and a second beam, by a non-polarizing beam splitter BS1. The first beam is not deflected and preferably hits a mirror M1 which deflects the beam preferably to a polarizing beam splitter PBS1. The same beam is then split again into two beams (a third and a fourth beam) by the polarizing beam splitter PBS1. One part of this beam (i.e. the fourth beam) is transmitted without deflection. The second part of the beam (i.e. the third beam), which is polarized orthogonally to the first one, is deflected upward toward a corner cube retroreflector TM1. This retroreflector, in the following named the first retroreflector, reflects the beam back, but with a lateral offset according to the depicted embodiment. The beam then hits a further corner cube retroreflector which belongs to a retroreflector assembly TM2. The two beams (third and fourth beams) are recombined at the polarizing beam splitter to form a first resulting beam which preferably hits a mirror M2. Preferably, a polarizer Pol1 brings the first resulting beams to a single polarization state. The second part of the beam emerging from the laser is deflected by the non-polarizing beam splitter BS1 (preferably by 90°). It then follows a similar path as the first one. First, the two different modes are separated by a second polarizing beam splitter PBS2. One mode, or a sixth beam, just passes PBS2 without deflection. A second mode, or a fifth beam, deflected upwards to a corner cube retroreflector which is part of the retroreflector assembly TM2, is reflected downwards to another corner cube retroreflector TM3 and then recombines at the second polarizing beam splitter PBS2 with the first mode, respectively the sixth beam. After the second polarizing beam splitter PBS2, this resulting second beam is preferably polarized by a polarizer. At a non-polarizing beam splitter BS2 both the resulting beams are recombined to a recombined beam, and if their polarization coincides, they will form an interference pattern, which can be detected by a photodetector D.

In general, the retroreflector assembly TM2 preferably contains two retroreflectors, rigidly connected to each other. The upper retroreflector shows upward, the lower one downward. However, it is also possible to provide a retroreflector assembly with two distinct retroreflectors either arranged in one vertical line or arranged essentially side by side. Preferably, the second retroreflector TM3 is arranged vertically below the first retroreflector TM1 with the retroreflectors of retroreflector assembly TM2 between them.

One aim of the gradiometer is basically to conduct a double differential measurement. The first beam can measure the path length change between retroreflector TM1 and the respective retroreflector of retroreflector assembly TM2, i.e. the upper retroreflector of the retroreflector assembly. The second beam can measure the path length change between retroreflector TM3 and the second retroreflector of the retroreflector assembly TM2, i.e. the lower retroreflector of the retroreflector assembly TM2. Of course it has to be appreciated that the wordings upper and lower must not be understood as limiting and shall only describe the position of the reflectors in accordance with Figure 1 according to the present embodiment. The superposition of both measurements gives their differential path length change. If retroreflector TM1, retroreflector TM3 and the retroreflectors of the retroreflector assembly TM2 move with the same velocity, or the same acceleration, in the same direction, no signal will be detected. Only if at least one of the retroreflectors moves differently than the others, a signal will be detected. By signal a change in the intensity of the interference pattern on the detector is meant.

As already mentioned above, one important application of the gradiometer in accordance with the invention is for example the measurement of non-linearity in the gravity gradient (third derivative of the gravitational potential). If it is assumed that retroreflectors TM1, TM3, and the retroreflectors of retroreflector assembly TM2 are aligned along the plumb line as shown in Figure 1, the earth's gravity gradient results in a different force on a massive body at different points along the plumb line. Since the gravity produced by earth is smaller the bigger its distance is with respect to earth's centre of mass, the retroreflectors TM1, TM3 and those of TM2 will be accelerated with different magnitudes, when they are released. If those bodies are released at the same time, at different positions, and they fall freely, just under the attraction of earth's gravity, they will separate from each other. For instance it may be assumed that retroreflector TM1 is farthest from the centre of earth, then retroreflector assembly TM2 is for example by d/2 closer to the centre of earth than retroreflector TM1, and last retroreflector TM3 may be e.g. by d closer to the centre of earth than retroreflector TM1. If the gravity gradient is assumed as constant, retroreflector assembly TM2, as depicted in Figure 1, will be accelerated with respect to retroreflector TM1. Retroreflector TM3 will be accelerated with respect to retroreflector assembly TM2. Since the separation between retroreflector TM1 and retroreflector assembly TM2 is the same as between retroreflector assembly TM2 and retroreflector TM3, the differential acceleration between retroreflector TM1 and retroreflector assembly TM2, and between retroreflector assembly TM2 and retroreflector TM3 is the same. The result is that the differential path length change between both the recombined beams is zero.

However, if it is assumed that the magnitude of the gravity gradient between retroreflectors TM1 and retroreflector assembly TM2 is different from its magnitude between retroreflector assembly TM2 and retroreflector TM3, which is in general the case, the path length change in the first resulting beam will be different from the second resulting beam. The result is a signal, which gives information about the deviation from linearity of the gravity.

Thus, the first beam and the second beam can be considered as two independent gravity gradiometers, which can measure the absolute value of the gravity gradient, mainly its constant part. In the first resulting beam and in the second resulting beam information is included which could be used to obtain the value of the gravity gradient, e.g. by placing a detector in the path of the first resulting beam or the second resulting beam for detection of an interference pattern.

A second possible application of the gradiometer in accordance with the invention is the measurement of the gravity field of a well defined source mass. Thus, it is obtained a method for determining, respectively measuring, the gravitational constant G. As also depicted in Figure 1 again the same separation between retroreflectors TM1 and retroreflector assembly TM2 as between retroreflector assembly TM2 and retroreflector TM3 is assumed. Two source masses SM1, SM2, which may be made identically, and hence preferably have the same shape and the same mass and mass distribution, may be arranged in a way that retroreflector TM1 is placed above source mass SM1, and retroreflector assembly TM2 below source mass SM1, and retroreflector TM3 above source mass SM2. When the retroreflector TM1 and retroreflector assembly TM2 are released at the same moment retroreflector TM1 will be attracted downward and retroreflector assembly TM2 upward by source mass SM1. This results in the reduction of the distance between retroreflector TM1 and retroreflector assembly TM2. This effect is, however, superposed with the differential movement due to earth's gravity gradient. Similar thing occurs to retroreflector assembly TM2 and retroreflector TM3 when released. Retroreflector assembly TM2 will be attracted by source mass SM1 upward and retroreflector TM3 by source mass SM2 downward. Its result is an increasing distance between retroreflector assembly TM2 and retroreflector TM3. This effect is also superposed with its differential movement due to earth's gravity gradient. If earth's gravity gradient is assumed as being constant (gravity changes linearly with increasing distance to the centre of earth), a combination of the first resulting beam and the second resulting beam cancels out the effect due to earth gravity gradient, since it is common mode for both gradiometers. As a result the pure signal of the two source masses may be obtained, which in addition is enhanced, since the first resulting beam gives a decreasing path length and the second resulting beam an increasing path length. This enables to determine the gravitational constant, G.

Furthermore, it is remarked that any source masses (SM1, SM2) are not necessarily part of the present gradiometer. They are just shown as a possible application, namely for the measurement of the gravitational constant, G. However, the source masses SM1, SM2 may also be part of the gradiometer.

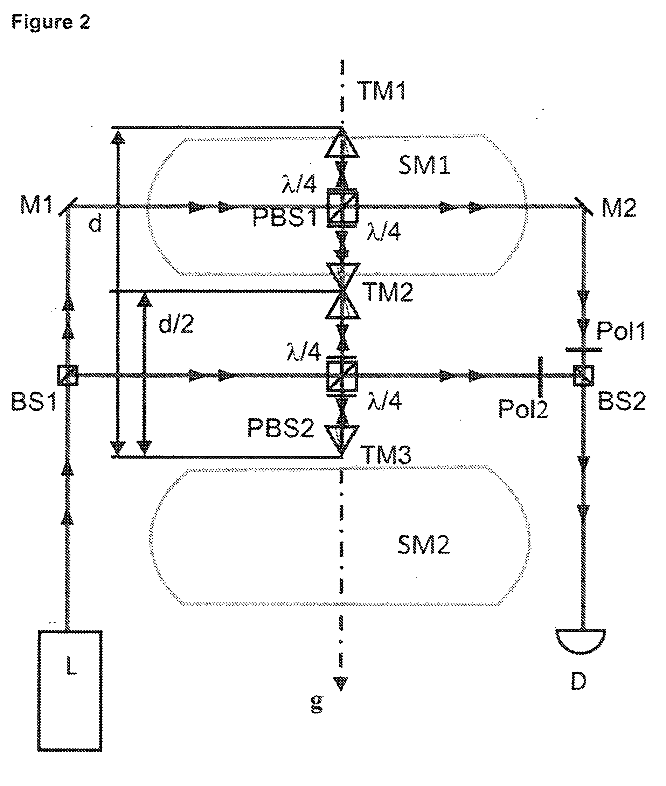

A second embodiment of a gradiometer in accordance with the present invention is depicted in Figure 2. One major advantage of this second embodiment is that it can be designed in general more compact than the gradiometer of the first ebodiment. Hence, the source masses SM1, SM2 can be closer to the test masses, respectively the retroreflectors. That gives e.g. a bigger signal to noise ratio for the measurement of the gravitational constant G. The retroreflectors TM1, TM3 and the assembly TM2 can be very small (e.g. less than half inch), since the beam preferably shines to the corner of the corner cube reflectors and no offset of the reflected beam occurs. The light path according to the second embodiment of the invention may be described as follows: A laser source L generates a beam with two orthogonally polarized modes. The beam is split into two beams by a non-polarizing beam splitter BS1. (in what follows the upper path of the beam will be called "upper beam" and the lower path of the deflected beam at the beam splitter BS1 will be called "lower beam"). The upper beam preferably hits mirror M1 which deflects it toward a polarizing beam splitter PBS1. One polarization mode just passes beam splitter PBS1 without deflection. The second mode is deflected upward toward the retroreflector TM1. The before description of the second embodiment is essentially equal to that of embodiment 1. Afterwards, the second mode is reflected back to polarizing beam splitter PBS1. During this path the beam crosses twice a lambda quarter plate λ/4 which rotates the polarization by 90°. This allows the beam now to pass the polarizing beam splitter PBS1 without deflection to hit retroreflector assembly TM2. During this path its polarization is turned again by 90° by crossing twice a lambda quarter plate λ/4. The beam is deflected now at polarizing beam splitter PBS1 to superpose with the first beam. Afterwards the two polarization modes are made equal at polarizer Pol1. The beam then passes non-polarizing beam splitter BS2 and hits the photo detector D. By just observing this signal the upper beam works as a first gradiometer, with which the gravity difference between retroreflector TM1 and the upper retroreflector of retroreflector assembly TM2 can be measured. The path of the lower beam is similar to the upper path, with the difference that now the beam hits the lower retroreflector of retroreflector assembly TM2 and retroreflector TM3. Polarizer Pol2 is preferably adjusted in a manner to coincide the two polarization modes in the lower beam and, in addition, preferably to coincide it with the upper beam. Non-polarizing beam splitter BS2 superposes upper beam and lower beam. The resultant signal received by the detector D contains the information about the gravity difference between retroreflector TM1 and the upper retroreflector of TM2, and the lower retroreflector of TM2 and retroreflector TM3. That means a double differential measurement is at hand.

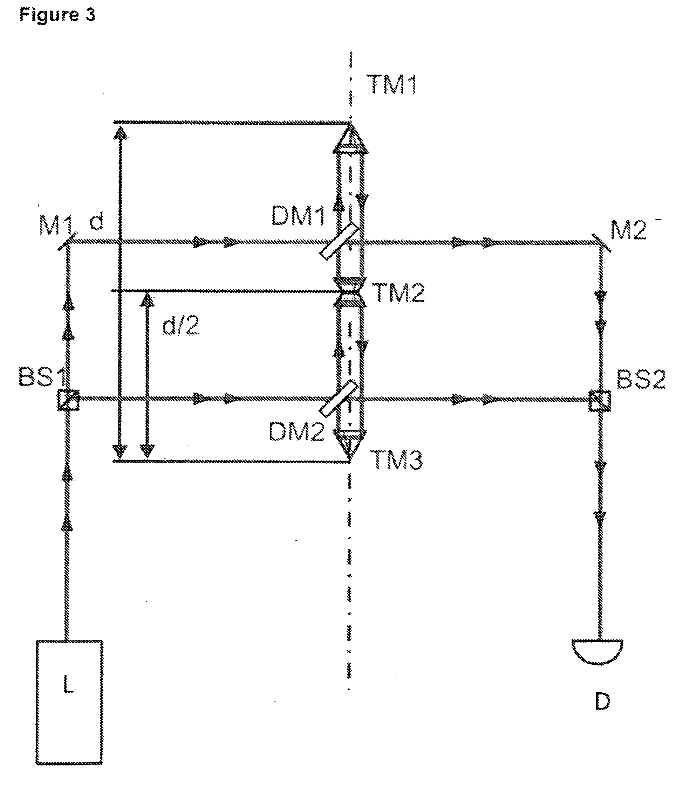

Figure 3 shows a third embodiment in accordance with the present invention. In this case a coherent light source L can be used which provides only one, single polarization state. However, in accordance with this embodiment it is also possible to use coherent light which has no polarization at all. The beam emerging from the laser source is split into a first and a second beam or in other words into a "beam up" and a "beam down". The frequency of beam up will be modulated by a first frequency shift due to the change in distance between retroreflector TM1 and the upper retroreflector of retroreflector assembly TM2. For beam down frequency will be shifted by a second frequency shift due to the changing distances of the lower retroreflector of retroreflector assembly TM2 and retroreflector TM3. Essentially, between TM1 and TM2 and TM3 and TM2 double mirrors DM1 and DM2 are arranged. Alternatively, these double mirrors could also be replaced by other appropriate devices, as e.g. by polarizing beam splitters. Such double mirrors or polarizing beam splitters are generally known to the skilled person. The resulting beams are combined by the beam splitter BS2. A resulting interference signal can be detected on detector D, which in the present case is essentially the frequency difference of the second frequency shift and the first frequency shift. In general, such interference patterns and their analysis are well known to the person skilled in the art of interferometers and in particular in the technical field of interferometric free-fall gradiometers.

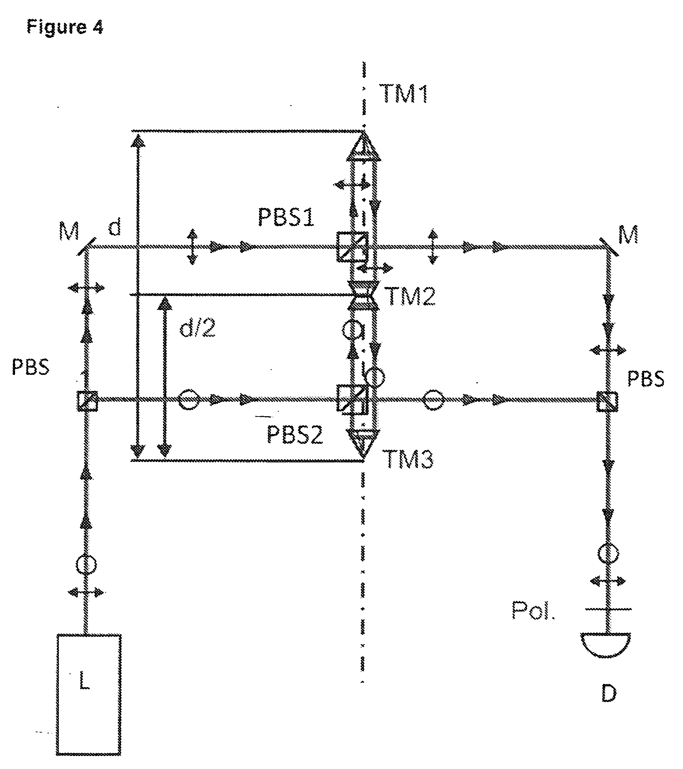

Figure 4 depicts another preferred embodiment in accordance with the invention. In this embodiment the source of coherent light L is adapted to generate two beams, with different polarization states (depicted as circle and arrow in Figure 4). The two beams are separated by means of a first polarizing beam splitter PBS1. Both beams can also have different frequencies f1 and f2 (such lasers are commercially available). The frequency of the beam with polarization state "arrow" (upper beam) is shifted due to the distance change between TM1 and TM2. The frequency of the beam with polarization state "circle" (lower beam) is shifted due to the distance change between TM2 and TM3. Consequently, their frequencies f1 and f2 are shifted by Δf1 and Δf2, respectively. A further beam splitter PBS2 recombines both beams again. Preferably, a following polarizer rotates the polarization states in order to interfere both beams. The resultant signal is again detected by means of a photo detector D.

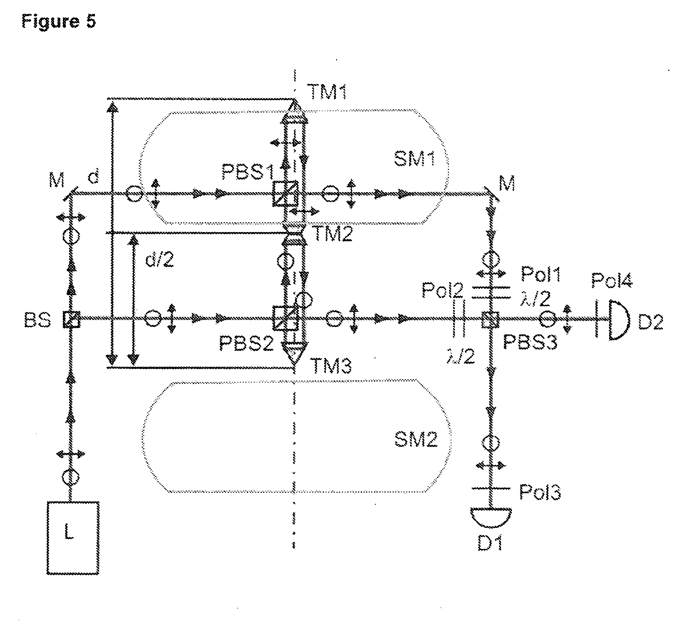

Figure 5 shows yet another preferred embodiment according to the present invention. It is similar to the embodiments shown in Figures 1 and 2. Additionally, the embodiment according to Figure 5 depicts only one preferred option of measuring, respectively determining, the second derivative of the gravitational potential as well as the third derivative of the gravitational potential. The laser light emerging from a laser L consists of two beams, with different (linear) polarization states (for instance depicted as circle and arrow). The beam is divided by means of the first beam splitter BS. Both polarization states may have different frequencies f1 and f2. The first beam, say "upper beam", which contains both polarization states, is divided by a polarizing beam splitter PBS1. The "arrow" beam is deflected while the "circle" beam passes PBS1 straight. The "arrow" beam is first reflected by the retroreflector TM1, then by the respective retroreflector of retroreflector assembly TM2 (or vice versa) and is recombined again by means of polarizing beam splitter PBS1 with the "circle" beam. By virtue of a polarizer Pol1 the polarization states of both beams can be coincided. The result is an interference signal due to a distance change between retroreflector TM1 and the retroreflector of retroreflector assembly or TM2. A A/2-plate can be used to turn the polarization state of the resultant beam in a way that it either passes the following polarizing beam splitter PBS3 straight to reach a first detector D1, or that it is deflected by PBS3 to reach a second detector D2. The polarizers Pol3, Pol4 can either be skipped or adjusted in a manner that the beam is transmitted. Something similar happens to the "lower beam". But here the "circle" beam is chosen to be deflected by the polarizing beam splitter PBS2. This beam is recombined by polarizing beam splitter PBS2 again after reflection from a retroreflector of retroreflector assembly TM2 and retroreflector TM3, as described already in the before mentioned embodiments. A following polarizer Pol2 may turn both polarization states to a common state. The resulting interference signal contains information about the distance change between the lower retroreflector of assembly TM2 and retroreflector TM3. Another λ/2-plate can be used to turn the polarization state of the resultant beam in a manner that it either passes the following polarizing beam splitter PBS3 straight to reach a detector D2, or that it is deflected by polarizing beam splitter PBS2 to reach the detector D1. Thus, this embodiment comprises two independent gravity gradiometers which are also capable to measure the gravity gradient (second derivative of the gravitational potential). Of course, the same system can be used to measure the third derivative of the gravitational potential in accordance with the invention. For instance polarizer Pol1 may be adjusted in a manner that only the "arrow" beam of the "upper beam" is transmitted and the "circle" beam is blocked. PBS3 may be adjusted in a manner that the "arrow" beam passes it straight. In addition polarizer Pol2 may be adjusted in a manner that only the "circle" beam of the "lower beam" is transmitted, and the "arrow" beam is blocked. The "circle" beam can now be deflected by polarizing beam splitter PBS3 (the "arrow" beam will be blocked) to follow the same direction as the "arrow" beam from the "upper beam". Both beams are, however, polarized perpendicular to each other. Polarizer Pol3 may turn the polarization states to a common direction. Finally, an interference signal can be observed on detector D1. As in the above embodiments, the signal arises from a differential distance change between retroreflectors TM1 and a retroreflector of assembly TM2 and retroreflector TM3 and the second retroreflector of retroreflector assembly TM2. It should be noted that polarizing beam splitter PBS3 could also be adjusted in a manner that the signal can be observed with the detector D2. According to the above description, polarizing beam splitter PBS3, polarizer Pol1, polarizer Pol2 and preferably both lambda half plates form, respectively constitute, a beam splitter assembly. Thus, as described above, the skilled person can adjust the polarizers, plates and the beam splitter of the beam splitter assembly either to recombine at least parts of the first resulting beam and the second resulting beam to a recombined beam which can be received by a detector D1, D2; or to reflect at least parts of one of the resulting beams to a first detector D1, D2 and/or at least parts of the second of the resulting beams to a second detector D2, D1. Hence, either the second or the third derivative of the gravitational potential can be measured in accordance with this preferred embodiment.

As in Figures 1 and 2, source masses SM1, SM2 are depicted in Figure 5. These source masses are, however, not essential for the present invention but may be used, as described before, to determine the gravitational constant G.

In general, it is remarked that mirrors M1, M2, polarizers Pol1, Pol2, Pol3, Pol4, Pol and polarizing beam splitters PBS1, PBS2, PBS3, PBS can be easily arranged and adapted operatively by the person skilled in the art of interferometric gradiometers. As in the above embodiment the non-polarizing beam splitters BS1 and BS2 are preferably intensity beam splitters, e.g. 50/50 beam splitters. Furthermore, the mirrors, polarizers and beam splitters may be adjusted by the person skilled in the field of interferometric gradiometers to achieve an operative, respectively functional, setup.

Additionally, it is remarked that the interpretation of interference patterns obtained by interferometric free fall gradiometry is in general also known by the skilled person. This applies as well to the known phenomenon of the Doppler-Shift which occurs in general in measurements using interferometric free fall gradiometers due to changing distances between reflectors, respectively their relative movement.

In general, the construction of a common free-fall gradiometer is known comprising e.g. elevators for lifting test masses, respectively the retroreflectors and devices for breaking their free fall. Such devices are not in the scope of the present invention and can be constructed in accordance with the technical knowledge of the skilled person.

Furthermore, the first and the second coherent beams of light could also be generated by two different sources of light. However, it is preferred that all utilized light beams are generated by the same source of coherent light.

At last, it is mentioned that the features of each the above described embodiments can be combined with each other. Moreover, constructive details can be adapted or changed by the skilled person in view of the desired design.

**List of reference signs**
- BS: non-polarizing beam splitter
- BS1: non-polarizing beam splitter
- BS2: non-polarizing beam splitter
- D: detector
- D1: detector 1
- D2: detector 2
- DM1: first double mirror
- DM2: second double mirror
- d: distance
- d/2: half distance of distance d
- g: gravity acceleration
- M1: mirror
- M2: mirror
- L: light source
- PBS: polarizing beam splitter
- PBS1: first polarizing beam splitter
- PBS2: second polarizing beam splitter
- PBS3: third polarizing beam splitter
- Pol: polarizer
- Pol1: polarizer
- Pol2: polarizer
- Pol3: polarizer
- Pol4: polarizer
- SM1: source mass
- SM2: source mass
- TM1: retroreflector / test mass
- TM2: retroreflector / test mass
- TM3: retroreflector assembly / test mass assembly
- λ/2: lambda half plate
- λ/4: lambda quarter plate

## Claims

1. Interferometric free-fall gradiometer suitable for measuring the derivative of the gravitational gradient, comprising:
at least one source of coherent light (L);
a first retroreflector (TM1) arranged to fall freely in the gradiometer;
a second retroreflector (TM3) arranged to fall freely in the gradiometer and disposed under the first retroreflector (TM1);
a light guiding assembly configured for guiding the coherent light to the first and second retroreflectors (TM1, TM3) thereby generating reflected beams and causing the reflected beams to interfere;
**characterized in that** the gradiometer further comprises:
an assembly of a third and a fourth retroreflector (TM2) arranged to fall freely in the gradiometer and disposed essentially between the first and second retroreflectors (TM1, TM3); and
wherein the light guiding assembly further comprises a beam splitter (BS2, PBS, PBS3);
and the at least one source of coherent light (L) and the light guiding assembly are arranged for generating a first beam and a second beam of light, the first beam being at least partially reflected by the first retroreflector (TM1) and subsequently by the third retroreflector, or vice versa, and the second beam being at least partially reflected by the second retroreflector (TM3) and subsequently by the fourth retroreflector, or vice versa, such that the interference of the resulting at least partially reflected first and second beams being combined by the beam splitter (BS2, PBS, PBS3) is indicative of the variation of the distance between the first (TM1) and the third retroreflectors and the distance between the second (TM3) and the fourth retroreflectors.

2. The gradiometer of claim 1, wherein all retroreflectors are arranged essentially in one vertical line.

3. The gradiometer of claim 1 or 2, wherein the third retroreflector and the fourth retroreflector of the assembly of retroreflectors (TM2) are connected to each other and are oppositely arranged.

4. The gradiometer according to anyone of the preceding claims wherein the coherent light has at least one linear polarization.

5. The gradiometer according to anyone of the preceding claims wherein the coherent light has at least two orthogonal linear polarizations; and wherein the light guiding assembly comprises:
a first non-polarizing beam splitter (BS1), arranged and adapted for splitting a beam of light generated by the source of light (L) into the first beam and the second beam;
a first polarizing beam splitter (PBS1) arranged and adapted for splitting the first beam into a third beam and a fourth beam, wherein the first retroreflector (TM1) is arranged and adapted for reflecting the third beam to the third retroreflector which is arranged and adapted for reflecting the third beam back to the first polarizing beam splitter (PBS1), or vice versa, such that the third beam and the fourth beam can recombine in form of the first resulting beam;
a second polarizing beam splitter (PBS2) arranged and adapted for splitting the second beam into a fifth and a sixth beam, wherein the second retroreflector (TM3) is arranged and adapted for reflecting the fifth beam to the fourth retroreflector which is arranged, and adapted for reflecting the fifth beam back to the second polarizing beam splitter (PBS2), or vice versa, such that the fifth beam and the sixth beam can recombine in form of the second resulting beam;
a second non-polarizing beam splitter (BS2) for recombining the first resulting beam and the second resulting beam to a recombined beam; whereas the gradiometer further comprises a detector (D) arranged for receiving the recombined beam.

6. The gradiometer according to claim 5, wherein the first polarizing beam splitter (PBS1) is arranged essentially between the first retroreflector (TM1) and the third retroreflector and wherein the second polarizing beam splitter (PBS2) is arranged essentially between the second retroreflector (TM3) and the fourth retroreflector; the gradiometer further comprising:
a first lambda quarter plate (λ/4) being arranged between the first retroreflector (TM1) and the first polarizing beam splitter (PBS1);
a second lambda quarter plate (λ/4) being arranged between the third retroreflector and the first polarizing beam splitter (PBS1);
a third lambda quarter plate (λ/4) being arranged between the second retroreflector (TM3) and the second polarizing beam splitter (PBS2); and
a fourth lambda quarter plate (λ/4) being arranged between the fourth retroreflector and the second polarizing beam splitter (PBS2).

7. The gradiometer according to claim 5 or 6, wherein the gradiometer further comprises a first polarization filter (Pol1) arranged in the path of the first resulting beam and/or a second polarization filter (Pol2) arranged in the path of second resulting beam.

8. The gradiometer according to anyone of the claims 1 to 4 wherein the coherent light has at least two orthogonal linear polarizations; and wherein the light guiding assembly comprises:
a first non-polarizing beam splitter (BS1), arranged and adapted for splitting a beam of light generated by the source of light (L) into the first beam and the second beam;
a first polarizing beam splitter (PBS1) arranged and adapted for splitting the first beam into a third beam and a fourth beam, wherein the first retroreflector (TM1) is arranged and adapted for reflecting the third beam to the third retroreflector which is arranged and adapted for reflecting the third beam back to the first polarizing beam splitter (PBS1), or vice versa, such that the third beam and the fourth beam can recombine in form of the first resulting beam;
a second polarizing beam splitter (PBS2) arranged and adapted for splitting the second beam into a fifth and a sixth beam, wherein the second retroreflector (TM3) is arranged and adapted for reflecting the fifth beam to the fourth retroreflector which is arranged, and adapted for reflecting the fifth beam back to the second polarizing beam splitter (PBS2), or vice versa, such that the fifth beam and the sixth beam can recombine in form of the second resulting beam;
a beam splitter assembly either arranged and adapted to at least partially recombine the first resulting beam and the second resulting beam to a recombined beam which can be received by a detector (D1, D2); or arranged and adapted to reflect one of the resulting beams at least partially to a first detector (D1, D2) and the second of the resulting beams at least partially to a second detector (D2, D1).

9. The gradiometer according to anyone of the claims 1 to 4, wherein the coherent light has at least one linear polarization; and wherein the guiding assembly comprises:
a first non-polarizing beam splitter (BS1), arranged and adapted for splitting a beam of light generated by the source of light (L) into the first beam and the second beam;
a first polarizing beam splitter (PBS1) or double mirror (DM1) arranged and adapted for guiding the first beam to the first retroreflector (TM1), where it is reflected to the third retroreflector, or vice versa, and subsequently reflected by the first polarizing beam splitter (PBS1) or double mirror (DM1) to form the first resulting beam;
a second polarizing beam splitter (PBS2) or double mirror (DM2) arranged and adapted for guiding the second beam to the second retroreflector (TM3), where it is reflected to the fourth retroreflector, or vice versa, and subsequently reflected by the second polarizing beam splitter (PBS2) or double mirror (DM2) to form the second resulting beam;
a second non-polarizing beam splitter (BS2) for recombining the first resulting beam and the second resulting beam to a recombined beam; whereas the gradiometer further comprises a detector (D) arranged for receiving the recombined beam.

10. The gradiometer according to anyone of the claims 1 to 4, wherein the coherent light has at least two orthogonal polarizations; and wherein the guiding assembly comprises:
a first polarizing beam splitter (PBS1) or double mirror (DM1) arranged and adapted for guiding the first beam to the first retroreflector (TM1) where it is reflected to the third retroreflector, or vice versa, and subsequently reflected by the first polarizing beam splitter (PBS1) or double mirror (DM1) to form the first resulting beam;
a second polarizing beam splitter (PBS2) or double mirror (DM2) arranged and adapted for guiding the second beam to the second retroreflector (TM3) where it is reflected to the fourth retroreflector, or vice versa, and subsequently reflected by the second polarizing beam splitter (PBS2) or double mirror (DM2) to form the second resulting beam; wherein the guiding assembly further comprises:
an initial polarizing beam splitter (PBS), arranged and adapted for splitting the beam of light generated by the source of light (L) into the first beam and the second beam, whereas the first beam exhibits a first polarization and the second beam exhibits a second polarization;
a recombining beam splitter (PBS) arranged and adapted for recombining the first resulting beam and the second resulting beam to a recombined beam; whereas the gradiometer further comprises a detector (D) arranged for receiving the recombined beam.

11. The gradiometer according to claim 10, wherein a polarizer (Pol) is arranged in the path of the recombined beam between the recombining beam splitter (PBS) and the detector (D).

12. The gradiometer according to anyone of the preceding claims, wherein the distance (d/2) between the first retroreflector (TM1) and the third retroreflector is equal to the distance (d/2) between the second retroreflector (TM3) and the fourth retroreflector.

13. The gradiometer according to anyone of the claims 5 to 12, wherein the first polarizing beam splitter (PBS1) or double mirror (DM1) is arranged essentially between the first retroreflector (TM1) and the third retroreflector and/or wherein the second polarizing beam splitter (PBS2) or double mirror (DM2) is arranged essentially between the second retroreflector (TM3) and the fourth retroreflector.

14. The gradiometer according to anyone of the preceding claims, wherein each of the reflectors is a corner cube reflector which is either arranged such that the respective incident beam of light is reflected with a lateral offset or is arranged such that the incident beam of light is reflected by a corner of the corner cube retroreflector.

## Patentansprüche

1. Interferometrisches Freifall-Gradiometer, geeignet für die Messung der Ableitung des Gravitationsgradienten, umfassend:
mindestens eine Quelle eines kohärenten Lichts (L);
einen ersten Retroreflektor (TM1), der so angeordnet ist, dass er frei in dem Gradiometer fallen kann;
einen zweiten Retroreflektor (TM3), der so angeordnet ist, dass er frei in dem Gradiometer fallen kann und sich unter dem ersten Retroreflektor (TM1) angeordnet ist;
eine Lichtführungsvorrichtung, die so konfiguriert ist, dass sie das kohärente Licht zum ersten und zweiten Retroreflektor (TM1, TM3) führt, dabei reflektierte Strahlen erzeugt und die Überlagerung der reflektierten Strahlen bewirkt;
**dadurch gekennzeichnet, dass** das Gradiometer darüber hinaus Folgendes umfasst:
eine Anordnung aus einem dritten und einem vierten Retroreflektor (TM2), die so angeordnet ist, dass sie frei in dem Gradiometer fällt und im Wesentlichen zwischen dem ersten und dem zweiten Retroreflektor (TM1, TM3) angeordnet ist; und
wobei die Lichtführungsvorrichtung außerdem einen Strahlteiler (BS2, PBS, PBS3) umfasst;
und die mindestens eine Quelle kohärenten Lichts (L) und die Lichtführungsvorrichtung zur Erzeugung eines ersten Lichtstrahls und eines zweiten Lichtstrahls angeordnet sind, wobei der erste Strahl mindestens teilweise von dem ersten Retroreflektor (TM1) reflektiert und anschließend von dem dritten Retroreflektor reflektiert wird, oder umgekehrt, wobei der zweite Strahl mindestens teilweise von dem zweiten Retroreflektor (TM3) und anschließend von dem vierten Retroreflektor oder umgekehrt reflektiert wird, derart, dass die Überlagerung der mindestens teilweise reflektierten ersten und zweiten Strahlen, die vom Strahlteiler (BS2, PBS, PBS3) vereinigt werden, bezeichnend für die Abstandsänderung zwischen dem ersten (TM1) und dem dritten Retroreflektor und für den Abstand zwischen dem zweiten (TM3) und dem vierten Retroreflektor ist.

2. Gradiometer nach Anspruch 1, wobei alle Retroreflektor im Wesentlichen in einer vertikalen Linie angeordnet sind.

3. Gradiometer nach Anspruch 1 oder 2, wobei der dritte Retroreflektor und der vierte Retroreflektor der Retroreflektoranordnung (TM2) miteinander verbunden und einander gegenüberliegend angeordnet sind.

4. Gradiometer nach einem der vorhergehenden Ansprüche, wobei das kohärente Licht mindestens eine lineare Polarisation aufweist.

5. Gradiometer nach einem der vorhergehenden Ansprüche, wobei das kohärente Licht mindestens zwei orthogonale lineare Polarisationen aufweist; und wobei die Lichtführungsvorrichtung Folgendes umfasst:
einen ersten nicht polarisierenden Strahlteiler (BS1), der so angeordnet und angepasst ist, dass er einen von der Lichtquelle (L) erzeugten Lichtstrahl in den ersten Strahl und den zweiten Strahl aufteilen kann;
einen ersten polarisierenden Strahlteiler (PBS1), der so angeordnet und angepasst ist, dass er den ersten Strahl in einen dritten Strahl und einen vierten Strahl aufteilen kann, wobei der erste Retroreflektor (TM1) so angeordnet und angepasst ist, dass der dritte Strahl zu dem dritten Retroreflektor reflektiert wird, der wiederum so angeordnet und angepasst ist, dass er den dritten Strahl zurück zu dem ersten polarisierenden Strahlteiler (PBS1) reflektiert, oder umgekehrt, so dass der dritte Strahl und der vierte Strahl sich wieder zu dem ersten resultierenden Strahl neu kombinieren können;
einen zweiten polarisierenden Strahlteiler (PBS2), der so angeordnet und angepasst ist, dass er den zweiten Strahl in einen fünften und einen sechsten Strahl aufteilt, wobei der zweite Retroreflektor (TM3) so angeordnet und angepasst ist, dass er den fünften Strahl zu dem vierten Retroreflektor reflektiert, der wiederum so angeordnet und angepasst ist, dass er den fünften Strahl zurück zu dem zweiten polarisierenden Strahlteiler (PBS2) reflektiert, oder umgekehrt, so dass der fünfte Strahl und der sechste Strahl sich wieder zu dem zweiten resultierenden Strahl neu kombinieren können;
einen zweiten nichtpolarisierenden Strahlteiler (BS2) zur Neukombination des ersten resultierenden Strahls und des zweiten resultierenden Strahls zu einem neu kombinierten Strahl; wobei das Gradiometer außerdem einen Detektor (D) umfasst, der so angeordnet ist, dass er den neu kombinierten Strahl empfangen kann.

6. Gradiometer nach Anspruch 5, wobei der erste polarisierende Strahlteiler (PBS1) im Wesentlichen zwischen dem ersten Retroreflektor (TM1) und dem dritten Retroreflektor angeordnet ist und wobei der zweite polarisierende Strahlteiler (PBS2) im Wesentlichen zwischen dem zweiten Retroreflektor (TM3) und dem vierten Retroreflektor angeordnet ist; das Gradiometer umfasst außerdem:
ein erstes Lambda-Viertel-Plättchen (λ/4), das zwischen dem ersten Retroreflektor (TM1) und dem ersten polarisierenden Strahlteiler (PBS1) angeordnet ist;
ein zweites Lambda-Viertel-Plättchen (λ/4), das zwischen dem dritten Retroreflektor und dem ersten polarisierenden Strahlteiler (PBS1) angeordnet ist;
ein drittes Lambda-Viertel-Plättchen (λ/4), das zwischen dem zweiten Retroreflektor (TM3) und dem zweiten polarisierenden Strahlteiler (TM3) angeordnet ist; und
ein viertes Lambda-Viertel-Plättchen (λ/4), das zwischen dem vierten Retroreflektor und dem zweiten polarisierenden Strahlteiler (PBS2) angeordnet ist.

7. Gradiometer nach Anspruch 5 oder 6, wobei das Gradiometer außerdem einen ersten Polarisationsfilter (Pol1) umfasst, der im Pfad des ersten resultierenden Strahls angeordnet ist, und/oder einen zweiten Polarisationsfilter (Pol2) umfasst, der im Pfad des zweiten resultierenden Strahls angeordnet ist.

8. Gradiometer nach einem der Ansprüche 1 bis 4, wobei das kohärente Licht mindestens zwei orthogonale lineare Polarisationen aufweist; und wobei die Lichtführungsvorrichtung Folgendes umfasst:
einen ersten nicht polarisierenden Strahlteiler (BS1), der so angeordnet und angepasst ist, dass er einen von der Lichtquelle (L) erzeugten Lichtstrahl in den ersten Strahl und den zweiten Strahl aufteilen kann;
einen ersten polarisierenden Strahlteiler (PBS1), der so angeordnet und angepasst ist, dass er den ersten Strahl in einen dritten Strahl und einen vierten Strahl aufteilen kann, wobei der erste Retroreflektor (TM1) so angeordnet und angepasst ist, dass der dritte Strahl zu dem dritten Retroreflektor reflektiert wird, der wiederum so angeordnet und angepasst ist, dass er den dritten Strahl zurück zu dem ersten polarisierenden Strahlteiler (PBS1) reflektiert, oder umgekehrt, so dass der dritte Strahl und der vierte Strahl sich wieder zu dem ersten resultierenden Strahl neu kombinieren können;
einen zweiten polarisierenden Strahlteiler (PBS2), der so angeordnet und angepasst ist, dass er den zweiten Strahl in einen fünften und einen sechsten Strahl aufteilt, wobei der zweite Retroreflektor (TM3) so angeordnet und angepasst ist, dass er den fünften Strahl zu dem vierten Retroreflektor reflektiert, der wiederum so angeordnet und angepasst ist, dass er den fünften Strahl zurück zu dem zweiten polarisierenden Strahlteiler (PBS2) reflektiert, oder umgekehrt, so dass der fünfte Strahl und der sechste Strahl sich wieder zu dem zweiten resultierenden Strahl neu kombinieren können;
eine Strahlteileranordnung, die entweder so angeordnet und angepasst ist, dass sie mindestens teilweise den ersten resultierenden Strahl und den zweiten resultierenden Strahl neu zu einem neu kombinierten Strahl kombiniert, der von einem Detektor (D1, D2) empfangen werden kann; oder die so angeordnet und angepasst ist, dass einer der resultierenden Strahlen mindestens teilweise auf einen ersten Detektor (D1, D2) und der zweite der resultierenden Strahlen mindestens auf einen zweiten Detektor (D1, D2) reflektiert wird.

9. Gradiometer nach einem der Ansprüche 1 bis 4, wobei das kohärente Licht mindestens eine orthogonale lineare Polarisation aufweist; und wobei die Führungsvorrichtung Folgendes umfasst:
einen ersten nicht polarisierenden Strahlteiler (BS1), der so angeordnet und angepasst ist, dass er einen von einer Lichtquelle (L) erzeugten Lichtstrahl in den ersten Strahl und den zweiten Strahl aufteilen kann;
einen ersten polarisierenden Strahlteiler (PBS1) oder einen Doppelspiegel (DM1), die so angeordnet und angepasst sind, dass sie den ersten Strahl zum ersten Retroreflektor (TM1) leiten, wobei er zu dem dritten Retroreflektor reflektiert wird, oder umgekehrt, und anschließend vom ersten polarisierenden Strahlteiler (PBS1) oder Doppelspiegel (DM1) zur Bildung des ersten resultierenden Strahls reflektiert wird;
einen zweiten polarisierenden Strahlteiler (PBS2) oder einen Doppelspiegel (DM2), die so angeordnet und angepasst sind, dass sie den zweiten Strahl zum zweiten Retroreflektor (TM3) leiten, wobei er zu dem vierten Retroreflektor reflektiert wird, oder umgekehrt, und anschließend vom zweiten polarisierenden Strahlteiler (PBS2) oder Doppelspiegel (DM2) zur Bildung des zweiten resultierenden Strahls reflektiert wird;
einen zweiten nichtpolarisierenden Strahlteiler (BS2) zur Neukombination des ersten resultierenden Strahls und des zweiten resultierenden Strahls zu einem neu kombinierten Strahl; wobei das Gradiometer außerdem einen Detektor (D) umfasst, der so angeordnet ist, dass er den neu kombinierten Strahl empfangen kann.

10. Gradiometer nach einem der Ansprüche 1 bis 4, wobei das kohärente Licht mindestens zwei orthogonale Polarisationen aufweist und wobei die Führungsvorrichtung Folgendes umfasst:
einen ersten polarisierenden Strahlteiler (PBS1) oder Doppelspiegel (DM1), der so angeordnet und angepasst ist, dass er den ersten Strahl zum ersten Retroreflektor (TM1) leitet, von wo aus er zu dem dritten Retroreflektor reflektiert wird, oder umgekehrt, und anschließend vom ersten polarisierenden Strahlteiler (PBS1) oder Doppelspiegel (DM1) zur Bildung des ersten resultierenden Strahls reflektiert wird;
einen zweiten polarisierenden Strahlteiler (PBS2) oder Doppelspiegel (DM2), der so angeordnet und angepasst ist, dass er den zweiten Strahl zum zweiten Retroreflektor (TM3) leitet, von wo aus er zu dem vierten Retroreflektor reflektiert wird, oder umgekehrt, und anschließend vom zweiten polarisierenden Strahlteiler (PBS2) oder Doppelspiegel (DM2) zur Bildung des zweiten resultierenden Strahls reflektiert wird; wobei die Führungsvorrichtung außerdem Folgendes umfasst:
einen ersten polarisierenden Strahlteiler (PBS), der so angeordnet und angepasst ist, dass er den von der Lichtquelle (L) erzeugten Lichtstrahl in den ersten Strahl und den zweiten Strahl aufteilt, wobei der erste Strahl eine erste Polarisation aufweist und der zweite Strahl eine zweite Polarisation aufweist;
einen neu kombinierenden Strahlteiler (PBS), der so angeordnet und angepasst ist, dass er den ersten resultierenden Strahl und den zweiten resultierenden Strahl zu einem kombinierten Strahl neu kombiniert; wobei das Gradiometer außerdem einen Detektor (D) umfasst, der so angeordnet ist, dass er den neu kombinierten Strahl empfangen kann.

11. Gradiometer nach Anspruch 10, wobei ein Polarisator (Pol) im Pfad des neu kombinierten Strahls zwischen dem neu kombinierenden Strahlteiler (PBS) und dem Strahlungsdetektor (D) angeordnet ist.

12. Gradiometer nach einem der vorhergehenden Ansprüche, wobei der Abstand (d/2) zwischen dem ersten Retroreflektor (TM1) und dem dritten Retroreflektor gleich dem Abstand (d/2) zwischen dem zweiten Retroreflektor (TM3) und dem vierten Retroreflektor ist.

13. Gradiometer nach einem der Ansprüche 5 bis 12, wobei der erste polarisierende Lichtteiler (PBS1) oder der Doppelspiegel (DM1) im Wesentlichen zwischen dem ersten Retroreflektor (TM1) und dem dritten Retroreflektor angeordnet ist bzw. wobei der zweite polarisierende Lichtteiler (PBS2) oder Doppelspiegel (DM2) im Wesentlichen zwischen dem zweiten Retroreflektor (TM3) und dem vierten Retroreflektor angeordnet ist.

14. Gradiometer nach einem der vorhergehenden Ansprüche, wobei jeder der Retroreflektor ein Tripelspiegelreflektor ist, der entweder so angeordnet ist, dass der jeweilige einfallende Lichtstrahl mit einem seitlichen Versatz reflektiert wird, oder der so angeordnet ist, dass der einfallende Lichtstrahl von einer Ecke des Tripelspiegelreflektors reflektiert wird.

## Revendications

1. Gradiomètre interférométrique de chute libre approprié pour mesurer la dérivée du gradient de gravité, comprenant :
au moins une source de lumière cohérente (L) ;
un premier rétroréflecteur (TM1) arrangé pour tomber librement dans le gradiomètre ;
un deuxième rétroréflecteur (TM3) arrangé pour tomber librement dans le gradiomètre et disposé en dessous du premier rétroréflecteur (TM1) ;
un assemblage de guidage de la lumière configuré pour guider la lumière cohérente en direction du premier et du deuxième rétroréflecteur (TM1, TM3) pour ainsi générer des faisceaux réfléchis et faire en sorte que les faisceaux réfléchis interfèrent ;
**caractérisé en ce que** le gradiomètre comprend en outre :
un assemblage d'un troisième et d'un quatrième rétroréflecteur (TM2) arrangé pour tomber librement dans le gradiomètre et disposé essentiellement entre le premier et le deuxième rétroréflecteur (TM1, TM3) ; et
dans lequel l'assemblage de guidage de la lumière comprend en outre un séparateur de faisceau (BS2, PBS, PBS3) ;
et ladite au moins une source de lumière cohérente (L) et l'assemblage de guidage de la lumière sont arrangés pour générer un premier réseau et un deuxième faisceau de lumière, le premier faisceau étant réfléchi au moins en partie par le premier rétroréflecteur (TM1) et ensuite par le troisième rétroréflecteur, ou vice versa, et le deuxième faisceau étant réfléchi au moins en partie par le deuxième rétroréflecteur (TM3) et ensuite par le quatrième rétroréflecteur, ou vice versa, de telle sorte que l'interférence desdits premier et deuxième faisceaux résultants réfléchis au moins en partie combinés par le séparateur de faisceau (BS2, PBS, PBS3) donne une indication de la variation de la distance entre le premier (TM1) et le troisième rétroréflecteur et de la distance entre le deuxième (TM3) et le quatrième rétroréflecteur.

2. Gradiomètre selon la revendication 1, dans lequel tous les rétroréflecteurs sont arrangés essentiellement sur une ligne verticale.

3. Gradiomètre selon la revendication 1 ou 2, dans lequel le troisième rétroréflecteur et le quatrième rétroréflecteur de l'assemblage de rétroréflecteurs (TM2) sont reliés l'un à l'autre et sont arrangés à l'opposé l'un de l'autre.

4. Gradiomètre selon l'une quelconque des revendications précédentes, dans lequel la lumière cohérente possède au moins une polarisation linéaire.

5. Gradiomètre selon l'une quelconque des revendications précédentes, dans lequel la lumière cohérente possède au moins deux polarisations linéaires orthogonales, et dans lequel l'assemblage de guidage de la lumière comprend :
un premier séparateur de faisceau non polarisant (BS1) arrangé et conçu pour séparer un faisceau de lumière généré par la source de lumière (L) afin d'obtenir le premier faisceau et le deuxième faisceau ;
un premier séparateur de faisceau polarisant (PBS1) arrangé et conçu pour séparer le premier faisceau en un troisième réseau et en un quatrième faisceau, le premier rétroréflecteur (TM1) étant arrangé et conçu pour réfléchir le troisième faisceau en direction du troisième rétroréflecteur qui est arrangé et conçu pour réfléchir le troisième faisceau en retour en direction du premier séparateur de faisceau polarisant (PBS1), ou vice versa, de telle sorte que le troisième faisceau et le quatrième faisceau peuvent se recombiner sous la forme du premier faisceau résultant ;
un deuxième séparateur de faisceau polarisant (PBS2) arrangé et conçu pour séparer le deuxième faisceau en un cinquième réseau et en un sixième faisceau, le deuxième rétroréflecteur (TM3) étant arrangé et conçu pour réfléchir le cinquième faisceau en direction du quatrième rétroréflecteur qui est arrangé et conçu pour réfléchir le cinquième faisceau en retour en direction du deuxième séparateur de faisceau polarisant (PBS2), ou vice versa, de telle sorte que le cinquième faisceau et le sixième faisceau peuvent se recombiner sous la forme du deuxième faisceau résultant ;
un deuxième séparateur de faisceau non polarisant (BS2) pour recombiner le premier faisceau résultant et le deuxième faisceau résultant afin d'obtenir un faisceau recombiné ; tandis que le gradiomètre comprend en outre un détecteur (D) pour la réception du faisceau recombiné.

6. Gradiomètre selon la revendication 5, dans lequel le premier séparateur de faisceau polarisant (PBS1) est arrangé essentiellement entre le premier rétroréflecteur (TM1) et le troisième rétroréflecteur, et dans lequel le deuxième séparateur de faisceau polarisant (PBS2) est arrangé essentiellement entre le deuxième rétroréflecteur (TM2) et le quatrième rétroréflecteur, le gradiomètre comprenant en outre :
une première lame quart d'onde (λ/4) arrangée entre le premier rétroréflecteur (TM1) et le premier séparateur de faisceau polarisant (PBS1) ;
une deuxième lame quart d'onde (λ/4) arrangée entre le troisième rétroréflecteur et le premier séparateur de faisceau polarisant (PBS1) ;
une troisième lame quart d'onde (λ/4) arrangée entre le deuxième rétroréflecteur (TM3) et le deuxième séparateur de faisceau polarisant (PBS2) ; et
une quatrième lame quart d'onde (λ/4) arrangée entre le quatrième rétroréflecteur (TM1) et le deuxième séparateur de faisceau polarisant (PBS1).

7. Gradiomètre selon la revendication 5 ou 6, dans lequel le gradiomètre comprend en outre un premier filtre de polarisation (Pol1) monté dans le chemin du premier faisceau résultant et/ou un deuxième filtre de polarisation (Pol2) monté dans le chemin du deuxième faisceau résultant.

8. Gradiomètre selon l'une quelconque des revendications 1 à 4, dans lequel la lumière cohérente possède au moins deux polarisations linéaires orthogonales, et dans lequel l'assemblage de guidage de la lumière comprend :
un premier séparateur de faisceau non polarisant (BS1) arrangé et conçu pour séparer un faisceau de lumière généré par la source de lumière (L) afin d'obtenir le premier faisceau et le deuxième faisceau ;
un premier séparateur de faisceau polarisant (PBS1) arrangé et conçu pour séparer le premier faisceau en un troisième réseau et en un quatrième faisceau, le premier rétroréflecteur (TM1) étant arrangé et conçu pour réfléchir le troisième faisceau en direction du troisième rétroréflecteur qui est arrangé et conçu pour réfléchir le troisième faisceau en retour en direction du premier séparateur de faisceau polarisant (PBS1), ou vice versa, de telle sorte que le troisième faisceau et le quatrième faisceau peuvent se recombiner sous la forme du premier faisceau résultant ;
un deuxième séparateur de faisceau polarisant (PBS2) arrangé et conçu pour séparer le deuxième faisceau en un cinquième réseau et en un sixième faisceau, le deuxième rétroréflecteur (TM3) étant arrangé et conçu pour réfléchir le cinquième faisceau en direction du quatrième rétroréflecteur qui est arrangé et conçu pour réfléchir le cinquième faisceau en retour en direction du deuxième séparateur de faisceau polarisant (PBS2), ou vice versa, de telle sorte que le cinquième faisceau et le sixième faisceau peuvent se recombiner sous la forme du deuxième faisceau résultant ;
un assemblage de séparateur de faisceau arrangé et conçu pour recombiner au moins en partie le premier faisceau résultant et le deuxième faisceau résultant obtenir un faisceau recombiné qui peut être reçu par un détecteur (D1, D2) ou bien arrangé et conçu pour refléter un des faisceaux résultants au moins en partie en direction d'un premier détecteur (D1, D2) et le deuxième faisceau parmi les faisceaux résultants au moins en partie en direction d'un deuxième détecteur (D1, D2).

9. Gradiomètre selon l'une quelconque des revendications 1 à 4, dans lequel la lumière cohérente possède au moins une polarisation linéaire, et dans lequel l'assemblage de guidage comprend :
un premier séparateur de faisceau non polarisant (BS1) arrangé et conçu pour séparer un faisceau de lumière généré par la source de lumière (L) afin d'obtenir le premier faisceau et le deuxième faisceau ;
un premier séparateur de faisceau polarisant (PBS1) ou un premier double miroir (DM1) arrangé et conçu pour guider le premier faisceau en direction du premier rétroréflecteur (TM1) où il est réfléchi en direction du troisième rétroréflecteur, ou vice versa, et ensuite réfléchi par le premier séparateur de faisceau polarisant (PBS1) ou le premier double miroir (DM1) pour former le premier faisceau résultant ;
un deuxième séparateur de faisceau polarisant (PBS2) ou un deuxième double miroir (DM2) arrangé et conçu pour guider le deuxième faisceau en direction du deuxième rétroréflecteur (TM3) où il est réfléchi en direction du quatrième rétroréflecteur, ou vice versa, et ensuite réfléchi par le deuxième séparateur de faisceau polarisant (PBS2) ou le deuxième double miroir (DM2) pour former le deuxième faisceau résultant ;
un deuxième séparateur de faisceau non polarisant (BS2) pour recombiner le premier faisceau résultant et le deuxième faisceau résultant afin d'obtenir un faisceau recombiné, tandis que le gradiomètre comprend en outre un détecteur (D) arrangé pour la réception du faisceau recombiné.

10. Gradiomètre selon l'une quelconque des revendications 1 à 4, dans lequel la lumière cohérente possède au moins deux polarisations linéaires, et dans lequel l'assemblage de guidage comprend :
un premier séparateur de faisceau polarisant (PBS1) ou un premier double miroir (DM1) arrangé et conçu pour guider le premier faisceau en direction du premier rétroréflecteur (TM1) où il est réfléchi en direction du troisième rétroréflecteur, ou vice versa, et ensuite réfléchi par le premier séparateur de faisceau polarisant (PBS1) ou le premier double miroir (DM1) pour former le premier faisceau résultant ;
un deuxième séparateur de faisceau polarisant (PBS2) ou un deuxième double miroir (DM2) arrangé et conçu pour guider le deuxième faisceau en direction du deuxième rétroréflecteur (TM3) où il est réfléchi en direction du quatrième rétroréflecteur, ou vice versa, et ensuite réfléchi par le deuxième séparateur de faisceau polarisant (PBS2) ou le deuxième double miroir (DM2) pour former le deuxième faisceau résultant ; dans lequel l'assemblage de guidage comprend en outre :
un séparateur de faisceau polarisant initial (PBS) arrangé et conçu pour séparer le faisceau de lumière généré par la source de lumière (L) afin d'obtenir le premier faisceau et le deuxième faisceau, tandis que le premier faisceau présente une première polarisation et le deuxième faisceau présente une deuxième polarisation ;
un séparateur de faisceau recombinant (PBS) arrangé et conçu pour recombiner le premier faisceau résultant et le deuxième faisceau résultant pour obtenir un faisceau recombiné, tandis que le gradiomètre comprend en outre un détecteur (D) arrangé pour la réception du faisceau recombiné.

11. Gradiomètre selon la revendication 10, dans lequel un polariseur (Pol) est arrangé dans le chemin du faisceau recombiné entre le séparateur de faisceau recombinant (PBS) et le détecteur (D).

12. Gradiomètre selon l'une quelconque des revendications précédentes, dans lequel la distance (d/2) entre le premier rétroréflecteur (TM1) et le troisième rétroréflecteur est égale à la distance (d/2) entre le deuxième rétroréflecteur (TM3) et le quatrième rétroréflecteur.

13. Gradiomètre selon l'une quelconque des revendications 5 à 12, dans lequel le premier séparateur de faisceau polarisant (PBS1) ou le premier double miroir (DM1) est arrangé essentiellement entre le premier rétroréflecteur (TM1) et le troisième rétroréflecteur et/ou dans lequel le deuxième séparateur de faisceau polarisant (PBS2) ou le deuxième double miroir (DM2) est arrangé essentiellement entre le deuxième rétroréflecteur (TM3) et le quatrième rétroréflecteur.

14. Gradiomètre selon l'une quelconque des revendications précédentes, dans lequel chacun des réflecteurs est un réflecteur coin cube qui est arrangé de telle sorte que le faisceau incident respectif de la lumière est réfléchi avec un décalage latéral ou bien est arrangé de telle sorte que le faisceau incident de la lumière est réfléchi par le coin du cube.
